# EUROPEAN PATENT APPLICATION

(11) **EP 4 503 519 A1**
(43) Date of publication of application: **05.02.2025**
(21) Application number: 24191271.6
(22) Date of filing: 26.07.2024
(51) Int. Cl.: H04L 9/40, G06F 16/903, H04L 67/12

(54) **PACKET FILTERING BASED ON VEHICLE STATE**

(30) Priority: 31.07.2023 US 202318362653
(71) Applicant: Avago Technologies International Sales Pte. Limited, Singapore 768923 (SG)
(72) Inventor: Arunarthi, Venkat, San Jose, 95135 (US); Wolfson, Bruce, Trabuco Canyon, 92679 (US); Saripalli, Ramesh, Aliso Viejo, 92656 (US); Choudhury, Abhijit Kumar, Cupertino, 95014 (US); Kwentus, Alan Y., Coto de Caza, 92679 (US)
(74) Representative: Dilg, Haeusler, Schindelmann Patentanwaltsgesellschaft mbH

(57) **Abstract**

Novel tools and techniques for packet filtering in a network. A networking device (200) might feature an access control list (ACL) with filter rules, each having a field to identify, for example, a possible state of a vehicle. Based on this field, rules inapplicable to that state can be disregarded when evaluating packets against the rules in the ACL.

## Description

### Technical Field

The claims relate generally to packet filtering in computer networks and, more specifically, to packet filtering in a vehicle network, accounting for a current state or context of the vehicle.

### Background

Ethernet networks (e.g., Internet Protocol ("IP)" networks) often use packet filtering for access control between devices. For instance, a networking device (e.g., router, firewall, switch, etc.) might either allow or block a given packet flow, generally based on characteristics of the sender and/or receiver of the packets, and/or the characteristics of the packets themselves. In a vehicle, for example, a packet flow can include communication between devices of the vehicle (such as sensors, electronic control units (ECU), and the like) and/or communication from outside the vehicle.

Networking devices commonly employ an Access Control List (ACL) to provide access control functionality when filtering packets. Generally, an ACL will instruct the networking device how to treat an incoming packet (e.g., block the packet, allow the packet, etc.). Often, the ACL becomes voluminous and imposes a non-trivial processing cost to evaluate, and determine an appropriate action for, each packet (or packet flow), reducing the ability of the networking device to timely process the packets as they arrive and introducing delays in delivery. In some contexts, additional computing resources can mitigate this situation. In other instances, however, such as the case of a vehicle network, computing resources are often heavily constrained.

One solution might be to modify the ACL (to add, remove, or modify rules) in certain circumstances, but that can be a cumbersome and error-prone process. If done dynamically, while the networking device is filtering packets, it can result in delayed (or dropped) packets, which must be buffered in some way while the ACL updates. Such untimely delivery of packets can be unacceptable, or even hazardous; for instance, untimely delivery of information to a vehicle ECU can cause the vehicle to operate unexpectedly, or even dangerously and/or could cause damage to the vehicle.

Hence, there is a need for a more efficient technique to filter packets in a network, particularly in networking devices that are resource constrained.

### Brief Description of the Drawings

Fig. 1 is a block diagram illustrating a vehicle comprising a vehicle network, in accordance with some embodiments.
Fig. 2 is a block diagram illustrating a networking device, in accordance with some embodiments.
Fig. 3 is a flow diagram illustrating methods of filtering packets, in accordance with some embodiments.
Figs. 4-6 illustrate components of filter rules in accordance with some embodiments.

### Detailed Description

Various embodiments provide devices (including networking devices), logic for programming such devices, and methods (which can be performed, e.g., by such devices) to filter packets in a network. (As used herein, "filter" means to perform, on the packet, one more management actions, e.g., as described in detail below) As used herein, the term "network" means any communication system (including transmission media and networking devices) that provides communication between various devices. In a particular set of embodiments, that network is a vehicle network, such as an Automotive Ethernet (AE) network, to name one example, which can include the functionality of a controller area network (CAN).

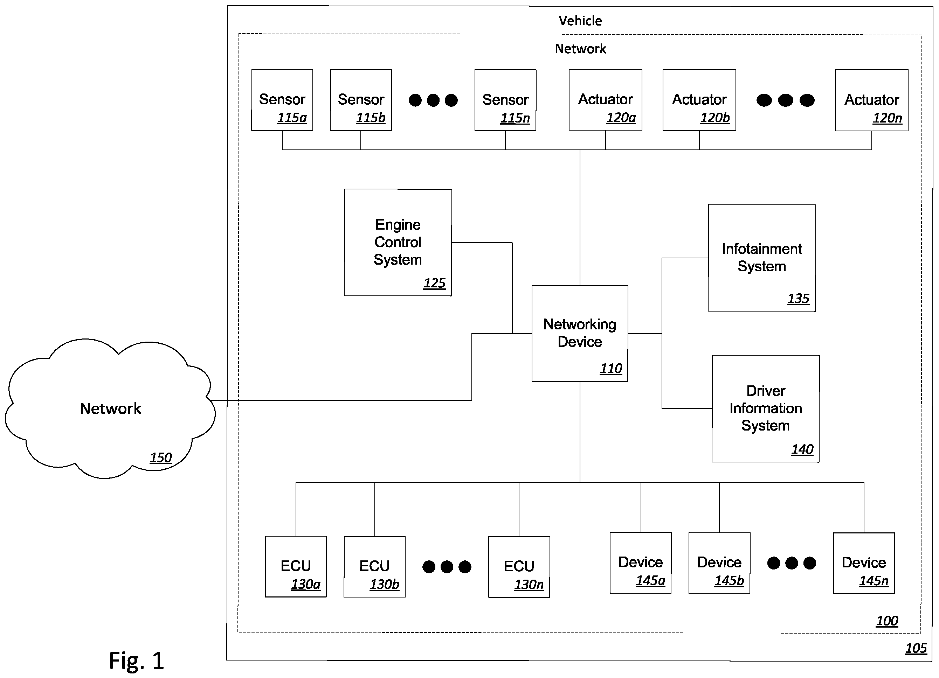

As illustrated by Fig. 1, a vehicle network 100 in some embodiments can be part of a vehicle 105 and can include one or more networking devices 110. The network 100 provides communication between various sensors 115 (e.g., temperature sensors, motion sensors, proximity sensors, cameras, presence sensors, vehicle operation sensors, etc.), actuators 120, engine control systems 125, ECUs 130 (e.g., transmission control systems, anti-lock braking systems, body control systems, speed control systems, battery management systems, powertrain control systems, door control systems, etc.), infotainment and driver information systems 135, 140, and other data-producing or data-consuming devices 145 in, on, or around the vehicle 105. In some cases, the network 100 can provide communication with a network 150 (e.g., the Internet) outside the vehicle 105.

Thus, some embodiments provide networking devices (and corresponding methods and logic) for vehicle networks. As used herein, the term "vehicle" means any type of conveyance for people or things. In accordance with some embodiments, a vehicle can be an automobile, motorcycle, bus, truck, construction equipment or the like. In other embodiments, a vehicle can be an aircraft, boat or ship, or the like. Some embodiments include a vehicle comprising such a network and/or networking device(s). Unless specifically indicated otherwise, the term "network" refers herein to such vehicle networks and any other suitable network. Such a network can include wired and/or wireless transmission media. In particular embodiments, the network is an Internet Protocol (IP) network, which might (or might not) include a router or gateway for internetworking with other networks, such as the Internet.

As used herein, the term "networking device" means any device or system that is capable of performing packet switching and/or routing in the network and, in particular, that can perform the packet filtering operations described herein. In some cases, a networking device can be an integrated switch or router, implemented as a system on a chip (SoC); in other cases, a networking device might be relatively less integrated, including several discrete components within a larger housing, such as conventional desktop or rackmount switches and/or routers. Thus, while devices according to some embodiments can include networking devices themselves, devices according to other embodiments can include (such as microprocessors, microcontrollers, SoC, application-specific integrated circuits (ASIC), and the like), that can be employed within a networking device and/or can perform some or all of the operations described herein.

Although specific packet filtering techniques are described in further detail below (and can include, but are not limited to, the management actions described below), the most basic implementation of packet filtering includes determining whether a particular packet received at the networking device should be delivered to its intended destination; if so, delivering the packet; and if not, refusing to deliver the packet (at least to the intended destination). Examples of networking devices can include, but are not limited to, routers, switches, bridges, gateways, firewalls, repeaters, hubs, modems, network interface cards, and/or access points. In some cases, a networking device might be a security device in communication with another networking device, such as a router or switch. In particular embodiments, a networking device can be embodied by a vehicle-specific Ethernet switch or router. Such switches and routers are often resource-constrained and must carefully manage those resources to avoid throttling packets that should be delivered.

As used herein, the term "packet" generally means a protocol data unit (PDU) at any appropriate layer of the Open Systems Interconnection (OSI) model. An Ethernet packet or frame (the two terms being used interchangeably herein) is an example of a packet, as that term is used herein. In general, a packet has a header (and/or trailer) portion and a payload portion. Thus, for example, an Ethernet packet (a physical (PHY or layer 1) packet), includes a preamble and a start frame delimiter, after which the packet includes an Ethernet frame, which itself is a datalink layer (layer 2) packet. The Ethernet frame includes header information (including a source and destination media access control (MAC) addresses) and a payload, which generally is a network (layer 3) packet. An IP packet is an example of a layer 3 packet, and it contains header information and payload information as well.

As noted above, various embodiments provide packet filtering techniques at any appropriate layer of the OSI model, and in particular at layers 2 and higher of the model. A networking device in accordance with some embodiments employs an access control list (ACL) to perform the packet filtering techniques described herein. As used herein, an ACL is a table or database, which can be stored in content-addressable memory (CAM), such as a ternary content-addressable memory (TCAM), or elsewhere, that comprises one or more filter rules. As noted above, each filter rule might be written with fields to match different packet fields (or portions) of interest to expected values; such fields can include header information (e.g., sending device address, destination device address, etc.) and/or payload information. Each rule also includes an action to be taken if a packet matches the expected values of the rule. As described in further detail below, actions to be taken can include, without limitation, admit (allow) or deny (block or drop) delivery of the packet flow, as in firewall blacklist/whitelist applications, or other, more specific actions, such as redirecting the packet flow to a different address (or port) than the destination address (or port corresponding to the destination address) specified in the header of the packet, snooping the packet, etc.

Table 1 depicts a typical ACL, with a plurality of rules (rows) each having fields (columns) for (1) rule priority, (2) expected packet values, and (3) an action to take if the packet matches the expect packet values.

**Table 1**

| **1** | **2** | | | | | **3** |
|---|---|---|---|---|---|---|
| Order | Protocol | Source IP | Source Port | Destination IP | Destination Port | Action |
| 1 | tcp | 140.192.37.20 | any | *.*.*.* | any | drop |
| 2 | tcp | 140.192.37.* | any | *.*.*.* | any | allow |
| 3 | Purposely empty for later addition | | | | | |
| 4 | | | | | | |
| 5 | udp | 140.192.37.* | any | *.*.*.* | 53 | allow |
| 6 | any | *.*.*.* | any | *.*.*.* | any | drop |

As shown by Table 1, the Order field specifies the order in which the rules should be used to evaluate an incoming packet. The Protocol, Source IP, Source Port, Destination IP, and Destination Port fields contain expected packet values, and the Action field specifies the action to be taken. In a typical system, the networking device will evaluate each rule, in the order specified by the Order column, until it finds a rule in which all of the expected packet values match the actual values of the incoming packet. At that point, the networking device will take the specified action, and stop evaluating the packet against any further rules. It should be noted that Table 1 can include empty rows (e.g., rows 3 and 4) for future configuration. This often is required because the ACL will need to be dynamically updated to add further rules, which might be higher priority than rules 5 and 6. As shown in this example, the priority of each rule is implicit in its order (from top to bottom of Table 1), although other priority schemes are possible as well.

In a novel aspect of some embodiments, a networking device's ACL is enhanced to include state information. As used herein, the term "state" and "context" are used interchangeably to mean information about a state or context, unrelated to the characteristics of the packet (or packet flow) itself in which the communication exists. In some embodiments, the state information relates to the state of a vehicle associated with (or comprising) the vehicle network of which the networking device is a part. Any of a variety of states or contexts are possible. For example, the state of a vehicle could include any one or more of the following data: vehicle gear status (drive, park, etc.), vehicle engine status (on, off), vehicle location, vehicle speed, vehicle acceleration, vehicle direction, identity of driver or passengers in vehicle, object(s) (e.g., other vehicles, traffic signals, pedestrians, etc.) proximate to vehicle and relative position(s) thereof, vehicle maintenance mode status (on, off), presence or absence of "maintenance required" notifications, fuel level, battery charge level, whether or not the vehicle is in an autonomous driving or advanced driver assistance mode, etc. These examples should not be considered limiting; in general, vehicle state can include any identifiable status or characteristic of a vehicle, its systems, occupants, and/or surroundings.

It should be noted as well that embodiments are not limited to contexts related to vehicles. Any number of contexts or states can be implemented using techniques within various embodiments. For example, in a non-vehicle network, a context might include time constraints (e.g., process only rules in which the current time matches an expected time state), commercial constraints (e.g., process only rules in which a customer status matches an expected customer states), etc. In one aspect, a context (including but not limited to a vehicle state) could include additional services purchased; for example, the ACL might specify that the networking device allow certain streaming traffic only if a particular service (e.g., a streaming service) had been purchased by the car owner (or, in other scenarios, customer of another type of service provider, such as an Internet service provider).

Table 2 illustrates an example of such an enhanced ACL that could be employed by a networking device in a vehicle network.

**Table 2**

| **1** | **4** | **2** | | | | | **3** |
|---|---|---|---|---|---|---|---|
| Order | Car State | Protocol | Source IP | Source Port | Destination IP | Destination Port | Action |
| 1 | any | tcp | 140.192.37.20 | any | *.*.*.* | any | drop |
| 2 | any | tcp | 140.192.37.* | any | *.*.*.* | any | allow |
| 3 | park | DOIP | *.*.*.* | any | *.*.*.* | any | allow |
| 4 | drive | SOME/IP | *.*.*.* | any | *.*.*.* | any | allow |
| 5 | >55mph | udp | 140.192.37.* | any | *.*.*.* | any | allow |
| 6 | any | tcp | *.*.*.* | any | 140.192.37.40 | 21 | allow, snoop |
| 7 | any | any | *.*.*.* | any | *.*.*.* | any | drop |

The ACL shown by Table 2 includes a field for "car state," which corresponds to a possible state of the vehicle, as described above. (The example of Table 2 also includes additional protocols, including diagnostics over IP (DoIP), which is a remote diagnostic protocol for vehicles, and Scalable service-Oriented MiddlewarE over IP (SOME/IP), which is an AE-specific middleware for passing control messages between devices on an AE.) One might note that the expected packet fields in Table 2 are limited to header information, in particular the protocol and source and destination addresses and ports. It should be appreciated that the nature of the expected packet value fields in Table 2 is exemplary, and various embodiments might include more or fewer fields, with various expected packet characteristics, including without limitation values corresponding to specific information in the packet payload and/or characteristics thereof.

In accordance with some embodiments, the networking device evaluates packets differently than a typical packet filtering technique. For instance, some embodiments pre-populate an ACL (e.g., in a TCAM) with enabled filter rules collectively encompassing all possible vehicle states.

Thus, in a set of embodiments, the networking device disregards any rule (irrespective of priority) in which the vehicle state does not match the expected state field of the ACL. Advantageously, this can produce much more efficient parsing of the ACL and evaluation of the packet than proceeding through each rule in order before finding a match, particularly for ACLs with hundreds or thousands of rules. In particular, this technique can allow even a resource-constrained networking device (e.g., in a vehicle network) to filter packets at line rate, avoiding a bottleneck at the networking device. As used herein, the term "line rate" means the rate at which the networking device receives packets from the network.

In an aspect of some embodiments, tracking the state of the vehicle is implemented in a configuration register outside of the CAM. In some cases, the networking device will have a plurality of configuration registers to store parameters controlling different aspects of the networking device. Any such register, or a portion of a register, can be used to store a value (e.g., an 8-bit value) that represents a particular state of the vehicle at the current time. In contrast to many configuration registers (which remain static until manually changed and then take effect at the next boot of the device), a configuration register for vehicle state can be updated dynamically. For instance, a management entity, typically software running on a CPU or a microcontroller of the network device (or elsewhere), updates this configuration register as the state of the vehicle changes; in some cases, these updates can be performed in real-time, or near real-time, with changes in the vehicle state. In accordance with various embodiments, the networking device matches the rules against vehicle state; only rules that are associated with current state of the vehicle are considered when evaluating an incoming packet for a rule match. Advantageously, certain embodiments can allow all this processing to be performed in hardware without CPU intervention once the filter rules are setup; the only task of CPU might be to update the state variable which is very light weight and quick task.

This hardware implementation can offer benefits when compared with implementing an ACL in software running on a CPU or a CPU dynamically updating the ACL in a TCAM by populating or enabling the rules that are relevant for the current state and deleting the rules that are not. The software implementations usually have limited processing capacity and can have difficulty scaling with increasing data rates because each packet that requires filtering must be forwarded to the CPU and back.

Dynamically updating the ACL in a TCAM can be problematic as well. Thus, various embodiments allow the ACL to be implemented as a static table (e.g., in a TCAM), although this is not required of all embodiments. Rather than leaving gaps in the ACL (an inefficient use of TCAM resources) and/or dynamically inserting, removing, or modifying rules in the ACL to attempt to address different vehicle states (a time-consuming and resource-expensive process), the ACL can be preconfigured with rules corresponding to many different vehicle states. This capability can be advantageous because the alternatives--parsing the entire ACL for each packet, swapping different sets of rules, or dynamically enabling/disabling different rules-each introduces complexity, delay, additional points of failure, and/or security vulnerabilities.

One exemplary device comprises logic to perform one or more operations. In some embodiments, the logic comprises instructions stored on a non-transitory computer readable medium and are executable by the processor to perform the operations. Alternatively, and/or additionally, the logic can be implemented by circuitry in hardware or firmware that performs some or all of the operations independently of the processor and/or as elsewhere described herein. The operations can include the networking device receiving an Ethernet packet at a line rate. In an aspect, the Ethernet packet might include header information identifying a source of the Ethernet packet and a destination of the Ethernet packet; in another aspect, the Ethernet packet might comprise an IP packet.

The operations can further include identifying a state of a vehicle and/or determining, based at least in part on the state of the vehicle, whether the Ethernet packet should be filtered. The operations can further include performing one or more management actions based on a determination of whether the Ethernet packet should be filtered.

Another set of embodiments provides devices, including without limitation devices programmed to perform the operations described herein. An exemplary device might comprise logic implemented in hardware and/or firmware circuitry that performs some or all such operations independently of a CPU or other processor. Alternatively, and/or additionally, the device might include a processor that can be programmed (e.g., with firmware or software) to perform some or all operations described herein.

An exemplary method provided by other embodiments can include receiving, at a computing system, an Ethernet packet at a line rate. In some cases, the Ethernet packet identifies a source of the Ethernet packet and a destination of the Ethernet packet. The method further can include identifying, with the computing system, a state of a vehicle and determining, with the computing system and based at least in part on the state of the vehicle, whether the Ethernet packet should be filtered. The method can also include performing one or more management actions based on a determination of whether the Ethernet packet should be filtered.

Another set of embodiments provides non-transitory computer readable media encoded with instructions. In some embodiments, the instructions are executable by one or more processors to perform the operations. In other embodiments, the instructions are implemented in hardware or firmware and are executable by hardware circuitry to perform some or all the operations independently of any processor. The operations can include the networking device receiving an Ethernet packet at a line rate. In an aspect, the Ethernet packet includes header information identifying a source of the Ethernet packet and a destination of the Ethernet packet; in another aspect, the Ethernet packet might comprise an IP packet. The operations can further include identifying a state of a vehicle and/or determining, based at least in part on the state of the vehicle, whether the Ethernet packet should be filtered. The operations can further include performing one or more management actions based on a determination of whether the Ethernet packet should be filtered.

Another set of embodiments provides vehicles, including without limitation vehicles that comprise networking devices as described herein, perform methods as described herein. and/or are programmed with logic to perform operations described herein.

### Exemplary Embodiments

Certain exemplary embodiments are described below. Each of the described embodiments can be implemented separately or in any combination, as would be appreciated by one skilled in the art. Thus, no single embodiment or combination of embodiments should be considered limiting.

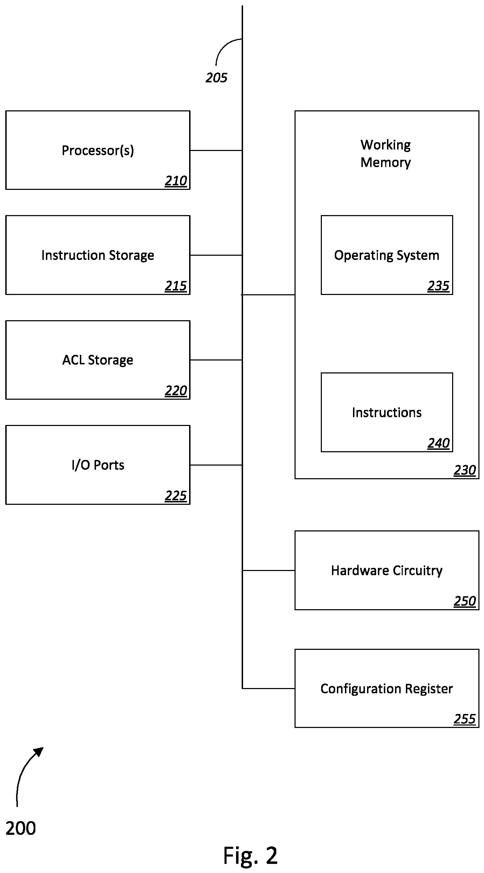

Fig. 2 is a block diagram illustrating an example of a networking device 200, which can function as described herein, including without limitation performance of the methods described below. As shown in Fig. 2, the device 200 may include a bus 205, one or more processors 210, storage for instructions 215, storage for an ACL 220, I/O ports 225, and a working memory 230.

The bus 205 includes one or more components that enable wired and/or wireless communication among the components of the networking device 200. The bus 205 may couple together two or more components of Fig. 2, such as via operative coupling, communicative coupling, electronic coupling, and/or electric coupling. The processor 210 can include a central processing unit, a graphics processing unit, a microprocessor, a controller, a microcontroller, a digital signal processor, a field-programmable gate array, an application-specific integrated circuit, and/or another type of processing component. The processor 210 can be implemented in hardware, firmware, or a combination of hardware and software. In some implementations, the processor 210 includes one or more processors capable of being programmed to perform one or more operations or processes described elsewhere herein. For example, the networking device 200 can include storage 215 for instructions used to program the processor 210 in this way. This storage 215 can be a nonvolatile memory, hard disk drive, etc. that stores the instructions. In a particular set of embodiments, the instructions are stored as hardware instructions, for example as encoded in hardware and/or firmware (e.g., hardware circuitry 250, discussed below). In such embodiments, the instructions are generally static (or, in the case of firmware, programmable but nonvolatile), because the operation of the networking device might vary only as required by the rules in the ACL, which can be stored in the ACL storage 220.

The ACL storage can be any medium used to store the ACL, which, as noted elsewhere herein, can generally comprise a database or table of rules. For example, Table 2 above depicts an example of an ACL. Such media can include nonvolatile storage, volatile storage, magnetic media, and/or the like. In a particular set of embodiments, the ACL storage comprises a TCAM, as described above. Advantageously, storage of the ACL in a TCAM provides much more efficient parsing of the ACL.

The networking device comprises a plurality of I/O ports 225, which, in particular embodiments, are Ethernet ports. Other embodiments can include different types of I/O ports (such as serial ports, etc.) and/or wireless radio(s). In some aspects, each of the ports of the networking device is connected to a different device or network segment of the vehicle network, which enables the network device to route or switch packets to the appropriate destination device/network segment if the ACL specifies that the packets should be delivered.

The networking device can also include a working memory 230, into which can be loaded an operating system 235 and/or instructions 240 (e.g., to perform the operations and methods described herein). In this way, the networking device 200 can be configured (or programmed) to perform such operations. Depending on the embodiment, the operating system 235 and/or instructions 240 may be loaded into working memory and/or might be run straight from firmware or hardware.

The networking device 200 may perform one or more operations or processes described herein. For example, a non-transitory computer-readable medium (e.g., the instruction storage 215) may store logic, such as a set of instructions 240 (e.g., one or more instructions or code) for execution by the processor 210. The processor 210 can execute the set of instructions 240 to perform one or more operations or processes described herein, such as procedures of method 300 described below. In some implementations, execution of the set of instructions 240, by one or more processors 210, causes the one or more processors 210 and/or the networking device 200 to perform such operations.

As noted above, in some embodiments, some or all of the logic might be implemented in hardwired circuitry (e.g., hardware or firmware), working cooperatively with or independently of any processor 210 the device might or might not have. (As noted above, in some cases, the circuitry 250 itself might be considered a processor 210.) In such cases, some or all of the logic enabling or causing the performance of some or all of the operations described herein might be encoded in hardware or firmware circuitry (e.g., circuitry 250) and executed directly by such circuitry, rather than being loaded into working memory 235 and run by the processor 210.

For instance, as noted above, in some embodiments, hardware circuitry 250 encoded with such logic (e.g., instructions) performs some or all of the operations herein (as described in further detail below) without intervention from the processor 210 once the rules in the ACL have been established. In that case, the processor 210 might serve to update the vehicle state variable in the configuration register 255 but might not be required to provide any functionality with respect to the procedures described herein. The offloading of such tasks from the processor 210 to specialized hardware circuitry 250 can help reduce the consumption of constrained computing resources in the networking device 200. Additionally, or alternatively, in other embodiments, the processor 210 may be configured (e.g., but software) to perform some or all of operations or processes described herein. Thus, unless the context dictates otherwise, embodiments described herein are not limited to any specific combination of hardware, firmware, and/or software.

In a set of embodiments, the networking device comprises a (and/or may be in communication with an external) configuration register 255. In some embodiments, information about the state of the vehicle is maintained in a configuration register apart from the instruction storage 215, ACL storage 220, and/or working memory 230, such as in the configuration register 255. A management entity, typically software running on a CPU or a microcontroller, such as the processor 210, can update this register (in some cases, in real time or near-real time) as the state of the vehicle changes.

The number and arrangement of components shown in Fig. 2 are provided as an example. The networking device 200 may include additional components, fewer components, different components, or differently arranged components than those shown in Fig. 2. Additionally, or alternatively, a set of components (e.g., one or more components) of the networking device 200 may perform one or more functions described as being performed by another set of components of the networking device 200.

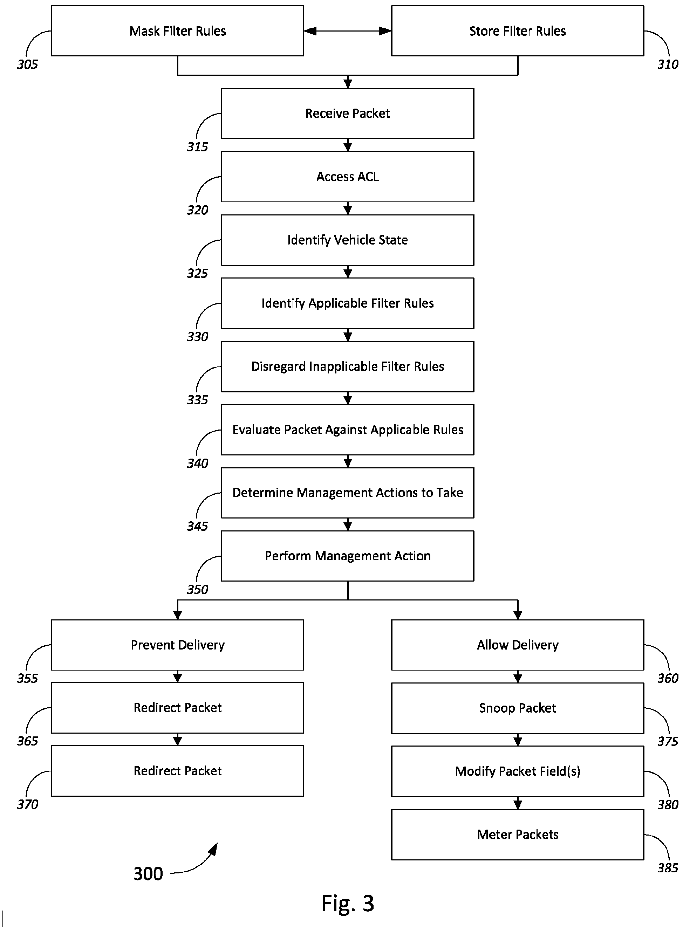

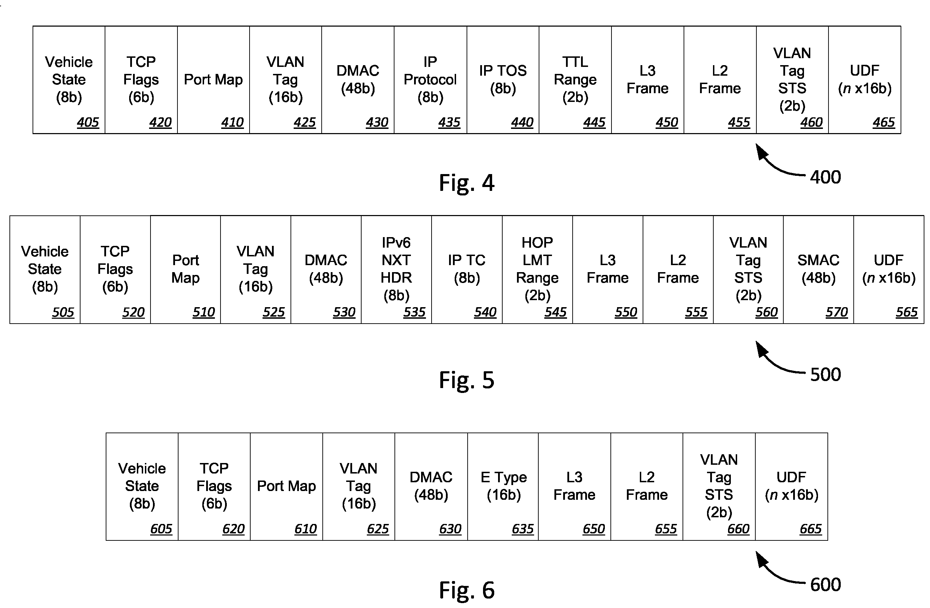

Fig. 3 illustrates a method 300, which can be used to perform packet filtering techniques in accordance with various embodiments. The method 300 comprises storing a plurality of filter rules (block 310), e.g., as part of an ACL, which can be stored in an ACL storage 220 of Fig.2. The ACL, as previously described, can be a database, table or list that stores a list of rules specifying actions to be taken when fields of an incoming packet match the expected fields specified by a rule. Table 2 depicts an exemplary ACL according to some embodiments. Fig. 4 illustrates in more detail the components of a filter rule in an ACL employed by various embodiments.

As used herein, the term "filter rule" means any rule that specifies or governs the behavior of the device under circumstances that match the rule. In a particular embodiment, a filter rule can specify a management action to perform in certain circumstances; such circumstances can include, but are not limited to, information in the packet itself (and/or an earlier packet in a packet flow) and/or information about a status of the vehicle, e.g., as described in further detail herein. The wide variety of filter rules possible under various embodiments can be ascertained from a few examples: As one example, a DolP packet transmits data related to vehicle diagnostics used for troubleshooting and fixing problems. A filter rule might allow diagnostic messages only if the vehicle is parked, perhaps on the grounds it is safter to run diagnostics to be run when the vehicle is not moving. As another example, an Over the Air (OTA) software update attempt can be blocked unless vehicle is parked, and optionally only during certain times such as in the middle of the night, or when the vehicle is parked in a specified location. Another example filter rule might not allow communication to an actuator that changes seat position while the vehicle is moving, as a hardware protection mechanism.

Figs. 4-6 illustrate exemplary rule formats in accordance with various embodiments. Fig. 4 illustrates an exemplary rule format 400 for IPv4 packets, Fig. 5 illustrates an exemplary rule format 500 for IPv6 packets, and Fig. 6 illustrates and exemplary rule format 600 for non-IP packets. Except where noted, the fields of each of the exemplary formats are labeled with similar reference numerals. Each exemplary rule format 400, 500, 600 includes a field (405, 505, 605) that identifies one or more possible states of the vehicle, a port map field (410, 510, 610), which can be it is a bit-map of ingress port(s) on the networking device, so a given rule can be configured to match packets received from select ingress ports, and numerous fields (420-460, 520-560, 570, 612-665) related to packet-specific information. Each rule also can include a plurality of user-defined fields (UDF) (465, 565, 665), which are configurable fields with offsets; these fields can be used to match any arbitrary packet field. In the illustrated embodiments, the size of each field is indicated (where applicable) in bits, and, as noted, the user-defined fields are 16 bits apiece. It should be appreciated that other embodiments can support different fields, different numbers of fields, and different sizes of fields.

As illustrated, the vehicle state fields (405, 505, 605) are encoded using 8 bits, which can allow for 256 unique vehicle states to be matched by the rules in the ACL. (Of course, the vehicle state could be encoded with more or fewer bits to support a greater or lesser number of unique vehicle states.). As described in further detail below, the car state variable can be used to discriminate between applicable rules and inapplicable rules for any given state of the vehicle. The use of these fields also allows an entire ACL to be prepopulated (and therefore, for the ACL to be static during operation), eliminating the need for additional processing or ACL manipulation to account for different vehicle states.

In some embodiments, the method 300 includes masking the vehicle state field in one or more of the ACL rules (block 305). This masking operation can be performed before, after, or during (and/or as part of) the storage of the filter rule(s). In some cases, a filter rule can be masked using mask bits. For instance, by specifying which bits (e.g., of an 8-bit vehicle identifier field) must match the actual vehicle state (e.g., another 8-bit value) and which bits need not, mask bits allow matching of a given rule against multiple vehicle states, providing greater flexibility as a rule doesn't have to be repeated for each applicable vehicle state. For example, a vehicle state field of 0001111X (where "X" represents a "don't care" value, which is applied using a bitmask), the field would match state values of 00011110 and 00011111, allowing that field to match two different state fields.

The method 300 can further comprise receiving a packet, e.g., at the networking device. The networking device receives packets on one or more ports that are coupled to the network's transmission medium (e.g., Ethernet) or wireless radios, and the packets are received at the "line rate" of the network. In order to avoid becoming a bottleneck, the networking device ideally will perform the packet filtering operations of Fig. 3 to process the incoming packets at line rate.

At block 320, the method 300 includes accessing the ACL, and at block 325, the method includes identifying a state of the vehicle. In different embodiments, one or both of these operations might be performed prior to receiving the packet (block 320). Thus, while Fig. 3 shows these operations in a particular order, various embodiments can employ these operations (and others) in a different order, unless clearly specified otherwise.

In a particular set of embodiments, the ACL is in stored in a TCAM, and accessing the ACL (block 320) can comprise accessing the ACL in the TCAM. As described herein, the ACL might comprise a plurality of filter rules. In an aspect, each of the plurality of filter rules can has an assigned priority and/or can comprise a field identifying one or more of a plurality of possible states of the vehicle.

In many embodiments, information about the current state of the vehicle is separate from the received packet; that is, in such embodiments, the received packet contains no information about the state of the vehicle. Thus, identifying the state of the vehicle (block 325) can include receiving information from another device about the state of the vehicle. In some embodiments, identifying the state of the vehicle can include accessing a configuration register (which can be located inside or outside the networking device but generally is not located in the ACL) that stores a value (which might be, but need not necessarily be, encoded using the same scheme as the encoding scheme for the vehicle state field in the ACL).

The method 300 can include determining, based at least in part on the state of the vehicle, one or more management actions to perform on the packet (block 345). Different embodiments can make this determination in different ways. Merely by way of example, in some embodiments, the determination of whether a packet should be filtered comprises identifying applicable filter rules (block 330). For instance, the networking device might be configured to identify as applicable all rules with a vehicle state field matching the current identified state of the vehicle by comparing each rule's vehicle state value with the identified state of the vehicle. As noted above, in some embodiments, the identified state of the vehicle is encoded in the same way as the possible vehicle state fields in the ACL, so this comparison can comprise a bitwise matching operation; if the vehicle state field of the rule has a bitmask, that bitmask can be considered in the comparison. For instance, using the example of Table 2, if the state of the car vehicle "driving less than 55mph") which a packet is received, the networking device would identify rules 1, 2, 4, and 6 as be applicable to the state of the vehicle.

In some embodiments, determining the management action(s) to perform might comprise disregarding all filter rules other than those identified as being applicable to the current state of the vehicle (i.e., inapplicable filter rules) (block 335). Using the example above, in which rules 1, 2, 4, and 6 are identified as applicable, the networking device would disregard rules 3 and 5 in evaluating that packet. This operation can provide significant advantages over evaluating the packet against all the rules in the ACL, as described above. In disregarding all inapplicable filter rules, the networking device effectively remaps the search universe of the ACL to include only the applicable rules without having to modify or update the ACL stored in the TCAM (or elsewhere) in any way.

Thus, determining the management actions to perform can comprise evaluating the packet against (only) those rules identified to be applicable to the current state of the vehicle (block 340), and in particular evaluating the packet against one or more of those applicable rules until a matching rule has been identified. In an aspect, this evaluation can be similar to a typical packet-filtering operation, except that the ACL effectively has been reduced in size logically (in some cases, without affecting the actual ACL itself) by disregarding rules inapplicable to the current vehicle state. As such, the evaluation might include evaluating the packet against every applicable rule, in order of the rules' priority, until a matching rule has been found (or, if no higher-priority matching rule is found, until a default, lowest-priority rule is reached). Returning to the example discussed in the preceding paragraphs, the networking device would evaluate the packet against rule 1, then (if the packet did not match rule 1), rule 2, then (if the packet did not match rule 2) rule 4, then (if the packet did not match rule 4), rule 6, and finally (if the packet did not match rule 6), rule 7, which is the default rule in the ACL shown in Table 2. As shown in Table 2, the default rule might be a generic "drop all" rule that includes no match criteria at all (i.e., a rule in which all fields are "any" or wildcarded) and which therefore drops all packets by default (i.e., unless a packet matches one of the higher-priority rules). In some embodiments, identifying the applicable rules and disregarding the inapplicable rules might be performed prior to evaluating the packet against any of the rules. In other embodiments, this is not required.

More specifically, should be noted that, in some cases (e.g., using a TCAM), the procedures of operations 330-340 can be performed in parallel; that is, determining whether a rule is applicable based on the vehicle state can be performed in parallel with evaluating a packet against other fields of the rule. Thus, while some embodiments perform discrete procedures with regard to the identification of applicable filter rules (block 330), disregard of inapplicable rules (block 335), and evaluation of a packet against the applicable rules (block 340), in other embodiments, the procedures of each of those operations can be performed in parallel and/or as part of a single operation.

Thus, in accordance with one set of embodiments, the networking device determines one or more management actions to perform on the packet (block 345), and at block 350, the method 300 comprises performing the determined management actions. Using, e.g., the techniques described herein, some embodiments make this determination and/or perform the determined management action(s) at the line rate.

In some embodiments, the determination of the management actions to take is based on the action field of the rule that the packet matches, as determined by the evaluation of the packet against one or more of the applicable rules, as described above. Thus, for example, if the packet in the example above were not from a source IP address of 140.192.37.* and the packet comprised a SOME/IP packet, it would match rule 4; the action field of that rule specifies "allow," so the networking device would determine that the management action to take would be to allow the packet to be delivered to its intended destination. If the packet were not from a source IP address of 140.192.37.* and were not a SOME/IP packet but were directed to a destination IP of address of 140. 192.37.40, the packet would match rule 6, for which the specified actions are allow and snoop. In this case, the networking device would determine that the packet should be filtered in some fashion (i.e., snooped) even while allowed to be delivered to its stated destination. If the same packet were directed to any other destination IP address, however, the packet would match rule 7 (the default rule), for which the action is "drop." In that case, the networking device would determine that the packet should be dropped or blocked.

The method 300 can further include performing the determined management action (block 350). Any number of management actions can be taken within the scope of various embodiments. As illustrated by Fig. 3, the most fundamental management actions to be performed usually are either preventing delivery of the packet to its intended destination (block 355) or allowing delivery of the packet to its intended destination (block 360). In addition to those two fundamental actions, however, other actions are available as well. For example, if the packet is not to be delivered to its intended destination (i.e., the destination address originally indicated in the header of the packet), the packet might be dropped (block 365) (i.e., discarded altogether), or it might be redirected to a new destination address (block 370), e.g., for further analysis or because the matching applicable rule indicates that the new destination address is more appropriate for some reason.

Similarly, if the packet allowed to be delivered, the method 300 can include other actions as well. For example, the networking device might snoop the packet for further examination (block 375) or otherwise allow for the snooping of the packet while the packet is being delivered, might modify one or more fields of the packet (block 380), such as a virtual local area network (VLAN) tag of the packet, a quality of service (QoS) mark of the packet, and/or the like, and/or might meter the packet (and/or subsequent related packets) (block 385), for example to enforce specified data rate limits.

### Conclusion

As described above, various embodiments provide novel tools and techniques for packet filtering. Such tools and techniques are particularly advantageous in vehicle networks (which often feature networking devices with limited computing resources), but various embodiments can provide advantages in a wide variety of networking situations and are not limited to vehicular implementations in any way.

In the foregoing description, for the purposes of explanation, numerous details are set forth to provide a thorough understanding of the described embodiments. It will be apparent to one skilled in the art, however, that other embodiments may be practiced without some of these details. In other instances, structures and devices are shown in block diagram form without full detail for the sake of clarity. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

Thus, the foregoing description provides illustration and description of some features and aspect of various embodiments, but it is not intended to be exhaustive or to limit embodiments to the precise form disclosed. One skilled in the art will recognize that modifications may be made in light of the above disclosure or may be acquired from practice of the implementations, all of which can fall within the scope of various embodiments. For example, the methods and processes described herein may be implemented using instructions, which can be encoded as software executable by one or more processors, hardware and/or firmware circuitry, custom integrated circuits (ICs), programmable logic, and/or any combination thereof. As used herein, the term "logic" to perform an operation can comprise any or all of these components.

Further, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Moreover, while the procedures of the methods and processes described herein are described in a particular order for ease of description, unless the context dictates otherwise, various procedures may be reordered, added, and/or omitted in accordance with various embodiments. Further, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods does not limit the implementations unless specifically recited in the claims below. Thus, when the operation and behavior of the systems and/or methods are described herein without reference to specific software code, one skilled in the art would understand that software and hardware can be used to implement the systems and/or methods based on the description herein.

In this disclosure, when an element is referred to herein as being "connected" or "coupled" to another element, it is to be understood that one element can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not preclude other connections, in which intervening elements may be present. Similarly, while the methods and processes described herein may be described in a particular order for ease of description, it should be understood that, unless the context dictates otherwise, intervening processes may take place before and/or after any portion of the described process, and, as noted above, described procedures may be reordered, added, and/or omitted in accordance with various embodiments.

In this application, the use of the singular includes the plural unless specifically stated otherwise, and use of the term "and" means "and/or" unless otherwise indicated. Also, as used herein, the term "or" is intended to be inclusive when used in a series and also may be used interchangeably with "and/or," unless explicitly stated otherwise (e.g., if used in combination with "either" or "only one of"). Moreover, the use of the term "including," as well as other forms, such as "includes" and "included," should be considered non-exclusive. Also, terms such as "element" or "component" encompass both elements and components comprising one unit and elements and components that comprise more than one unit, unless specifically stated otherwise. As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Unless otherwise indicated, all numbers used herein to express quantities, dimensions, and so forth should be understood as being modified in all instances by the term "about." As used herein, the articles "a" and "an" are intended to include one or more items and may be used interchangeably with "one or more." Similarly, as used herein, the article "the" is intended to include one or more items referenced in connection with the article "the" and may be used interchangeably with "the one or more." As used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. In the foregoing description, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Thus, while each dependent claim listed below may directly depend on only one claim, the disclosure of various implementations includes each dependent claim in combination with every other claim in the claim set. No element, act, or instruction used herein should be construed as critical or essential unless explicitly described as such.

## Claims

1. A networking device (200) in a vehicle, the networking device (200) comprising:
a processor (210);
a ternary content addressable memory (220), TCAM;
circuitry to receive an Ethernet packet comprising an Internet Protocol, IP, packet
at a line rate, the Ethernet packet identifying a source of the Ethernet packet and a destination of the Ethernet packet;
circuitry to access a configuration register (255) of the vehicle to identify a state of the vehicle;
circuitry to access, in the TCAM (220), a static access control list, ACL, comprising a plurality of filter rules, wherein each of the plurality of filter rules:
has a priority; and
comprises a field that identifies one or more of a plurality of possible states of the vehicle;
circuitry to compare the identified state of the vehicle with the field of each filter rule that identifies one or more of the plurality of possible states of the vehicle to identify one or more of the plurality of filter rules as applicable, based on the state of the vehicle;
circuitry to evaluate the Ethernet packet against at least one of the one or more applicable filter rules by order of priority of the one or more applicable filter rules;
circuitry to determine, at the line rate and based at least in part on the evaluation of the Ethernet packet against at least one of the one or more applicable filter rules, one or more management actions to perform on the packet; and
circuitry to perform the one or more management actions on the packet.

2. A device, comprising:
logic to receive an Ethernet packet at a line rate, the Ethernet packet identifying a source of the Ethernet packet and a destination of the Ethernet packet;
logic to identify a state of a vehicle;
logic to determine, based at least in part on the state of the vehicle, one or more management actions to be taken on the packet; and
logic to perform the one or more management actions on the packet.

3. The device of claim 2, wherein the vehicle comprises the device.

4. The device of claim 2 or 3, further comprising:
a ternary content addressable memory (220), TCAM.

5. The device of claim 4, further comprising logic to store, in the TCAM (220), an access control list, ACL, comprising a plurality of filter rules.

6. The device of claim 5, wherein determining one or more management actions to be taken on the packet comprises:
evaluating the Ethernet packet against at least one of the filter rules.

7. The device of claim 6, wherein each of the plurality of filter rules has a priority, and wherein evaluating the Ethernet packet against at least one of the filter rules comprises evaluating the Ethernet packet against the at least one of the filter rules according to the priority of each of the at least one filter rules.

8. The device of claim 6 or 7, wherein determining whether the Ethernet packet should be filtered further comprises:
identifying one or more of the plurality of filter rules as applicable based on the state of the vehicle; and
disregarding all the filter rules other than the identified one or more applicable filter rules when evaluating the Ethernet packet.

9. The device of claim 8, wherein each of the plurality of filter rules comprises a field that identifies one or more of a plurality of possible states of the vehicle.

10. The device of claim 9, comprising at least one of the following features:
wherein the plurality of possible states of the vehicle comprises one or more of the following: vehicle gear status, vehicle engine status, vehicle location, vehicle speed,
vehicle acceleration, vehicle direction, identity of driver or passengers in vehicle, objects proximate to vehicle and relative positions thereof, vehicle maintenance mode status,
activation of maintenance required notifications, fuel level, battery charge level,
whether or not the vehicle is in an autonomous driving mode; whether or not the vehicle is in an advanced driver assistance mode;
wherein identifying one or more of the plurality of filter rules as applicable based on the state of the vehicle comprises:
comparing the identified state of the vehicle with the field of each filter rule that identifies one or more of the plurality of possible states of the vehicle.

11. The device of any of claims 8 to 10, comprising at least one of the following features:
wherein disregarding all the filter rules other than the identified one or more applicable filter rules when evaluating the Ethernet packet occurs before evaluating the Ethernet packet against any of the filter rules;
further comprising:
logic to mask, in one or more of the plurality of filter rules, the field identifying one of the plurality of possible states of the vehicle to identify at least two of the plurality of possible states of the vehicle.

12. The device of any of claims 2 to 11, comprising at least one of the following features:
wherein information identifying the state of the vehicle is separate from the Ethernet packet;
wherein identifying a state of the vehicle comprises accessing a configuration register (255) that stores the information identifying the state of the vehicle;
wherein the logic comprises at least one of hardware instructions or firmware instructions that are executable by hardware independent of a processor;
wherein the device is a system on a chip, SoC.

13. The device of any of claims 2 to 12, wherein the one or more management actions comprises one of the following actions:
preventing delivery of the Ethernet packet to the identified destination, based at least in part on a determination that the Ethernet packet should be filtered; or
allowing delivery of the Ethernet packet to the identified destination, based at least in part on an absence of a determination that the Ethernet packet should be filtered.

14. The device of claim 13, wherein the one or more management actions further comprises at least one of the following actions:
redirecting the packet for further processing and examination;
allowing snooping of the packet for further examination while allowing the packet to be delivered to the identified destination;
modifying one or more fields of the packet and delivering the packed with the modified one or more modified fields; or
metering the packed and a plurality of subsequent packets to enforce specified data rate limits.

15. A vehicle comprising a networking device (200), the networking device (200) comprising:
logic to receive an Ethernet packet at a line rate, the Ethernet packet identifying a source of the Ethernet packet and a destination of the Ethernet packet;
logic to identify a state of a vehicle;
logic to determine, based at least in part on the state of the vehicle, one or more management actions to be taken on the packet; and
logic to perform the one or more management actions on the packet.
